# EUROPEAN PATENT APPLICATION

(11) **EP 4 786 530 A1**
(43) Date of publication of application: **05.08.2026**
(21) Application number: 24888388.6
(22) Date of filing: 11.09.2024
(51) Int. Cl.: C08J 7/046, B05D 3/06, B05D 5/00, B05D 7/04, B05D 7/24, B32B 27/00, B32B 27/16, C08J 7/00

(54) **RESIN GLASS, METHOD FOR PRODUCING RESIN GLASS, AND APPARATUS FOR PRODUCING RESIN GLASS**

(30) Priority: 07.11.2023 JP 2023189762
(71) Applicant: Ushio Denki Kabushiki Kaisha, Minato-ku, Tokyo 1080073 (JP)
(72) Inventor: SHIMIZU Akihiro, Tokyo 100-8150 (JP)
(74) Representative: Maiwald GmbH
(86) International application number: PCT/JP2024/032485
(87) International publication number: WO 2025/100088

(57) **Abstract**

To provide a resin glass having an excellent surface abrasion resistance. The present invention also provides a method and an apparatus for producing the resin glass.

A resin glass includes: a substrate having visible light transmissivity; and a hard coat layer containing a silicone polymer and formed over the substrate, in which the hard coat layer has a modified region on an outer surface of the hard coat layer, the modified region containing an inorganic glass component with a proportion higher than a proportion on a surface of the hard coat layer on the side facing the substrate, and the proportion of the inorganic glass component of the modified region is 40% to 50%.

## Description

### TECHNICAL FIELD

The present invention relates to a resin glass, a method for producing a resin glass, and an apparatus for producing a resin glass.

### BACKGROUND ART

For example, it has been studied to adopt a resin glass instead of a silicate glass as a window material provided in an opening portion of an automobile or a construction machine. A resin material such as polycarbonate constituting the resin glass can be expected to have translucency equivalent to that of the silicate glass with respect to visible light. In addition, a resin material such as polycarbonate has an advantage of being easily molded or being excellent in heat insulating properties.

However, a resin material such as polycarbonate has a property that the surface is easily damaged. On the other hand, a technique is known in which a hard coat layer containing a silicone polymer is formed over a substrate formed of the resin material, and the hard coat layer is irradiated with ultraviolet light. For example, as shown in Patent Document 1, the surface of a hard coat layer is modified by irradiating the hard coat layer with ultraviolet light, and the abrasion resistance of the surface of the substrate formed of the resin material is improved.

### PRIOR ART DOCUMENTS

### PATENT DOCUMENT

Patent Document 1: JP 6434350 B2

### SUMMARY OF THE INVENTION

### PROBLEMS TO BE SOLVED BY THE INVENTION

The present inventors have studied on obtaining a resin glass having the improved abrasion resistance of the surface by forming a hard coat layer containing a silicone polymer over a substrate formed of polycarbonate, and modifying the hard coat layer by irradiation with ultraviolet light. As a result, the present inventors have found a problem that, although the abrasion resistance of the surface of the resin glass is improved by modifying the hard coat layer, when the modification of the hard coat layer progresses too much, the abrasion resistance of the surface is reduced, and a resin glass excellent in abrasion resistance cannot be obtained.

In view of the above, an object of the present invention is to provide a resin glass having excellent surface abrasion resistance. The present invention also provides a method and an apparatus for producing the resin glass.

### MEANS FOR SOLVING THE PROBLEMS

A resin glass according to the present invention includes:
a substrate having visible light transmissivity; and
a hard coat layer containing a silicone polymer and formed over the substrate, wherein
the hard coat layer has a modified region on an outer surface of the hard coat layer, the modified region containing an inorganic glass component with a proportion higher than a proportion on a surface of the hard coat layer on the side facing the substrate, and
the proportion of the inorganic glass component of the modified region is 40% to 50%.

The phrase "having visible light transmissivity" means that the transmittance with respect to visible light is 70% or more, preferably 80% or more, and more preferably 90% or more.

In addition, in the present description, the "silicone polymer" refers to a polymer having a siloxane bond and having an organic group such as a methyl group, a phenyl group, a vinyl group, or an alkoxy group in a side chain.

The hard coat layer has a modified region formed by irradiating the outer surface with ultraviolet light. As a result of intensive studies, the present inventor has found that the proportion of the inorganic glass component in the modified region correlates with the abrasion resistance of the resin glass. The details will be described in the section of "MODE FOR CARRYING OUT THE INVENTION", but the present inventor has found that by setting the proportion of the inorganic glass component to 40% to 50%, a resin glass having excellent surface abrasion resistance can be obtained, and has devised the above configuration.

Although details will be described later, the "proportion of the inorganic glass component" is obtained by determining the proportion of the inorganic glass component to the sum of the organic silicone component and the inorganic glass component, which is obtained by analyzing the surface of the hard coat layer by infrared spectroscopy (Attenuated Total Reflectance-Fourier Transform Infrared Spectroscopy (ATR-FTIR)).

The resin glass described above may be provided for a windshield of an automobile.

At present, a windshield of an automobile is required to have a ΔHaze value of 2% or less, the ΔHaze value being an index of abrasion resistance obtained in an abrasion test specified in JIS R 3212 (Test method for safety glass for automobile). The ΔHaze value is an index represented by a difference between the haze value before the abrasion test and the haze value after the abrasion test, and the ΔHaze value decreases as the abrasion resistance increases. The haze value is a degree of diffusion of light transmitted through a sample represented in a numerical form.

In addition, an index of abrasion resistance for a windshield of an automobile is similarly set in Europe and the United States. At present, for example, standards such as ECE R43 in Europe and ANSI Z26.1 in the United States are specified.

Although the details will be described later, according to the above configuration, a resin glass having a ΔHaze value of 2% or less is obtained. In other words, the resin glass is suitable for a windshield of an automobile.

In the resin glass described above,
the modified region may have a thickness on a submicron order in a direction orthogonal to a main surface of the substrate.

Here, the "main surface" refers to a surface having a much larger area than the other surfaces from among surfaces constituting a plate-shaped object.

A method for producing a resin glass according to the present invention includes
a step of forming a modified region by irradiating a hard coat layer with ultraviolet light having a main wavelength in a wavelength band of 243 nm or less and modifying a surface of the hard coat layer, the hard coat layer containing a silicone polymer and formed over a substrate having visible light transmissivity, in which
the step of forming the modified region is a step of irradiating the hard coat layer with the ultraviolet light such that a proportion of an inorganic glass component in the modified region is 40% to 50%.

The "main wavelength" described herein indicates, in a case where a wavelength band Z(λ) covering ±10 nm of a wavelength λ is defined in an emission spectrum, a wavelength λi in a wavelength band Z(λi) at which an integrated intensity accounts for 40% or more of the total integrated intensity of the emission spectrum. For a light source, such as an excimer lamp in which a luminescent gas such as Xe is sealed, that has a considerably narrow half band width and displays light intensities only at specific wavelengths, normally, a wavelength with the highest relative intensity (a main peak wavelength) may be regarded as the main wavelength.

Furthermore, an apparatus for producing a resin glass according to the present invention is the apparatus forming a modified region by irradiating, with ultraviolet light, a substrate having visible light transmissivity and formed with a hard coat layer containing a silicone polymer and by modifying a surface of the hard coat layer, the apparatus including:
a support unit that supports the substrate; and
a light source that emits the ultraviolet light having a main wavelength located in a wavelength band of 243 nm or less toward the substrate, in which
the light source irradiates the hard coat layer with the ultraviolet light with an integrated amount of light such that a proportion of the inorganic glass component in the modified region is 40% to 50%.

The apparatus for producing a resin glass described above may further include:
a storage unit that stores an integrated amount of light such that a proportion of the inorganic glass component in the modified region is 40% to 50%; and
a controller that controls a lighting operation of the light source on a basis of the integrated amount of light stored in the storage unit.

Specific examples of the method and apparatus for producing the resin glass will be described later.

### EFFECT OF THE INVENTION

According to the present invention, a resin glass having an excellent surface abrasion resistance is provided. The present invention also provides a method and an apparatus for producing the resin glass.

### BRIEF DESCRIPTION OF THE DRAWINGS

Fig. 1 is a cross-sectional view illustrating a structure of an embodiment of a resin glass.
Fig. 2 is a view illustrating a substrate, a primer layer, and a hard coat layer in an exploded manner.
Fig. 3 is a view illustrating a step of irradiating the hard coat layer with ultraviolet light.
Fig. 4 is a view schematically illustrating a structure of a silicone polymer constituting the hard coat layer.
Fig. 5 is a view schematically illustrating a structure of the silicone polymer after irradiation with ultraviolet light.
Fig. 6 is an example of a transmission spectrum of a silicone polymer, obtained by infrared spectroscopy (ATR-FTIR).
Fig. 7 is a graph illustrating results of Verification 1.
Fig. 8 is a graph illustrating results of Verification 2.
Fig. 9 is a view illustrating a configuration example of an apparatus for producing the resin glass.

### MODE FOR CARRYING OUT THE INVENTION

Hereinafter, a resin glass according to the present invention will be described with reference to the drawings as appropriate. Note that each of the drawings described below is schematic illustration, and dimensional ratios and the numbers of components in the drawings do not necessarily coincide with actual dimensional ratios and the actual numbers of components.

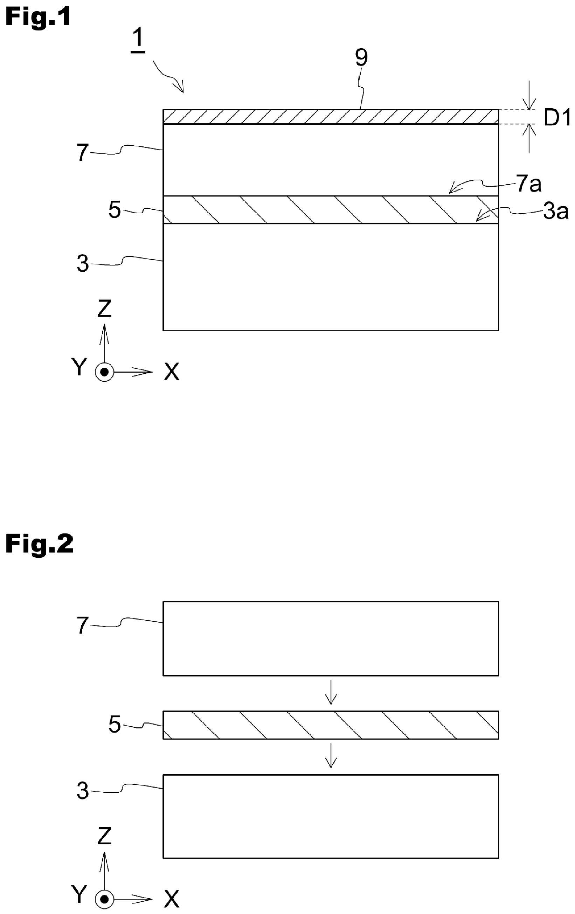

Fig. 1 is a cross-sectional view illustrating a structure of an embodiment of a resin glass 1. As shown in Fig. 1, the resin glass 1 is a laminate including a substrate 3, a primer layer 5 formed over the substrate 3, and a hard coat layer 7 formed over the substrate 3 with the primer layer 5 interposed therebetween. The hard coat layer 7 has, on an outer surface thereof, a modified region 9 formed by irradiation with ultraviolet light L1.

In each of the following drawings, an X-Y-Z coordinate system in which a direction orthogonal to a main surface 3a of the substrate 3 is a Z direction and a plane orthogonal to the Z direction is an XY plane is appropriately referred to.

Furthermore, in the present description, the expression "a layer B is formed over a layer A" is intended to include a case in which the layer B is formed on a surface of the layer A with a layer different from the layer B interposed therebetween, as well as a case in which the layer B is formed directly on the surface of the layer A. In addition, while having a substrate such as a polycarbonate substrate as a reference, the expression "over" described herein refers to a direction away from the substrate in the Z direction.

Hereinafter, details of the resin glass 1 will be described together with a method for producing the resin glass 1.

### [Preparation of substrate 3]

Fig. 2 is a view illustrating the substrate 3, the primer layer 5, and the hard coat layer 7 in an exploded manner from the viewpoint of easy understanding. First, the substrate 3 having visible light transmissivity is prepared. The material constituting the substrate 3 is optional as long as the substrate 3 exhibits visible light transmissivity, and as an example, the substrate 3 is formed of a synthetic resin such as polycarbonate or acrylic resin. In addition, various modes are conceivable for the shape and dimension of the substrate 3. The substrate 3 is, for example, a rectangular plate-like body having a long side of 1500 mm.

### [Formation of primer layer 5]

Next, as illustrated in Fig. 2, the primer layer 5 is formed over the substrate 3. As a specific example, after cleaning the substrate 3 and removing dust and the like adhering to the main surface 3a, the substrate 3 is immersed in a primer liquid, or the primer liquid is sprayed onto the substrate 3 by a spray gun or the like, to apply the primer liquid to the substrate 3. Thereafter, the substrate 3 is dried at a predetermined temperature for a certain period of time to have the primer layer 5 formed over the substrate 3.

The primer layer 5 is formed of, for example, a material containing an acrylic resin as a main component. As an example, the primer layer 5 is formed of SHP470 FT-2050 manufactured by Momentive Performance Materials Inc. The primer layer 5 is provided from the viewpoint of improving adhesion between the substrate 3 and the hard coat layer 7 and weather resistance of the resin glass 1, but in the present invention, whether or not the primer layer 5 is formed is optional.

### [Formation of hard coat layer 7]

Next, as illustrated in Fig. 2, the hard coat layer 7 is formed over the substrate 3 with the primer layer 5 interposed therebetween. The hard coat layer 7 is formed of a material containing, as a main component, a silicone polymer in which an organic group such as a methyl group is bonded as a side chain to a main chain formed by a siloxane bond. As an example, the hard coat layer 7 is formed of AS4700F manufactured by Momentive Performance Materials Inc. Here, the "main component" may refer to a material having the highest constituent proportion among materials constituting, for example, the hard coat layer 7.

By a coating method such as the substrate 3 being immersed into a solution containing the silicone polymer or the solution being sprayed onto the substrate 3 with a spray gun, a coating film of the solution is formed on the substrate 3. Thereafter, the coating film is dried at a predetermined temperature for a certain period of time to have the hard coat layer 7 formed over the substrate 3.

The primer liquid for forming the primer layer 5 and the solution for forming the hard coat layer 7 may be applied by a coating method such as flow coating in addition to the above-described coating method.

### [Modification of hard coat layer 7]

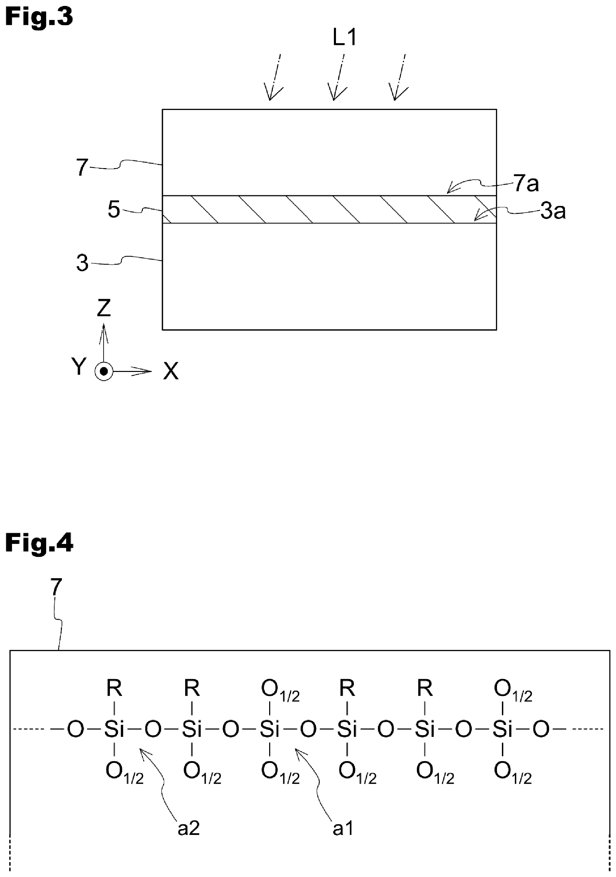

Fig. 3 is a view illustrating a step of irradiating the hard coat layer 7 with ultraviolet light L1. As illustrated in Fig. 3, the hard coat layer 7 is irradiated with the ultraviolet light L1. As a result, as shown in Fig. 1, the surface of the hard coat layer 7 is modified, and the modified region 9 is formed.

Irradiation with the ultraviolet light L1 is executed by using, as a light source, for example, an excimer lamp in which a light emitting gas containing Xe is sealed (not illustrated in Fig. 3). In this case, the main wavelength of the ultraviolet light L1 is located at 172 nm. In addition, the main wavelength of the ultraviolet light L1 can be made different by changing the component of the light emitting gas of the excimer lamp. For example, combinations of respective light emitting gases and the main wavelengths are Kr (146 nm), ArBr (165 nm), ArF (193 nm), KrBr (207 nm), and KrCl (222 nm). The value of the main wavelength herein includes a variation of about ±2 nm caused by individual differences such as partial pressure of the light emitting gas.

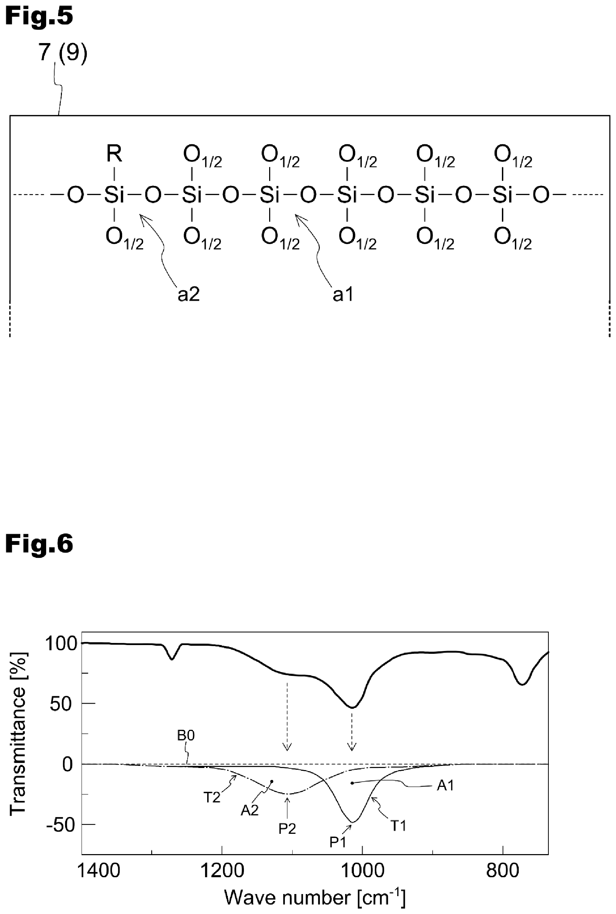

A modification mechanism of the hard coat layer 7 by the ultraviolet light L1 will be described. Fig. 4 is a view schematically illustrating a structure of a silicone polymer constituting the hard coat layer 7. Fig. 5 is a view schematically illustrating a structure of the silicone polymer after irradiation with the ultraviolet light L1. In Figs. 4 and 5, R represents an organic group such as a methyl group, a phenyl group, a vinyl group, or an alkoxy group. In addition, "O_{1/2}" indicates that the oxygen atom is bonded to adjacent Si as well as the bonded Si.

As illustrated in Fig. 4, in the siloxane bond constituting the hard coat layer 7, Si atoms a1 each having four bonds with oxygen atoms and Si atoms a2 each having a bond with an organic group are mixed. By the hard coat layer 7 being irradiated with the ultraviolet light L1, light energy (hv) corresponding to the wavelength is supplied, and the Si-R bond in the side chain of the siloxane bond is photocleaved. Furthermore, the ultraviolet light L1 photolyzes oxygen molecules present in the atmosphere to generate excited state oxygen (hereinafter, referred to as "oxygen radical"). Then, the generated oxygen radical diffuses into the hard coat layer 7, and is bonded to the portion where the Si-R bond is photocleaved. As a result, as shown in Fig. 5, in the hard coat layer 7, the number of Si atoms a2 bonded to an organic group decreases, and the number of Si atoms a1 bonded to four oxygen atoms increases.

The state in which Si atoms are bonded to four oxygen atoms is a state in which the silicone polymer is vitrified (SiO₂-converted), and can be referred to as an "inorganic glass component". Further, for convenience, a state in which a Si atom has a bond with an organic group is referred to as an "organic silicone component". By irradiating the hard coat layer 7 with the ultraviolet light L1, the modified region 9 in which the organic silicone component is reduced and the inorganic glass component is increased is formed on the outer surface of the hard coat layer 7. That is, the modified region 9 is an "inorganic glass-rich region", and in the modified region 9, for example, the inorganic glass component is present in a larger amount than in a surface 7a of the hard coat layer 7 on the side facing the substrate 3.

The penetration depth of the ultraviolet light L1 into the hard coat layer 7 is limited to some extent. This is considered to be because the transmittance of the ultraviolet light L1 of the hard coat layer 7 is low, and the penetration depth of the ultraviolet light L1 applied to the hard coat layer 7 is less than 1 µm. Therefore, a thickness D1 of the modified region 9 formed by irradiation with the ultraviolet light L1 in the Z direction is less than 1 µm and is on the order of submicron (see also Fig. 1).

The "submicron order" may refer to a range of 0.1 µm to 0.9 µm.

The thickness D1 of the modified region 9 can also be measured, for example, by etching the modified region 9 with a hydrofluoric acid aqueous solution having a concentration of about 2% while masking a part thereof, then removing the mask, and scanning a boundary between the etched region and the masked region with a step profiler. As the step profiler, Dektak3 manufactured by Veeco Instruments Inc. or the like can be used.

From the viewpoint of photocleaving the Si-R bond or the bond of oxygen molecules, the ultraviolet light L1 preferably contains a wavelength component that exhibits light energy higher than binding energy of the Si-R bond or oxygen molecules. The binding energy of the Si-R bond is about 3.2 eV, which is about 388 nm in terms of wavelength. Furthermore, the binding energy of oxygen molecules is about 5.1 eV, which is about 243 nm in terms of wavelength. The binding energy of the Si-O bond forming the main chain is about 4.7 eV, which is about 264 nm in terms of wavelength. That is, from the viewpoint of breaking these bonds, the ultraviolet light L1 is preferably in a wavelength band where the main wavelength is 243 nm or less.

As an index indicating a degree of progress of the modification of the hard coat layer 7 by the ultraviolet light L1, absorbance in each vibration mode indicated by the O-Si-O bond can be used. Fig. 6 is an example of a transmission spectrum of the hard coat layer 7, obtained by infrared spectroscopy (ATR-FTIR). As illustrated in Fig. 6, the silicone polymer constituting the hard coat layer 7 exhibits light absorption derived from symmetric bending vibration of O-Si-O and antisymmetric stretching vibration of O-Si-O at a wave number of about 900 cm⁻¹ to 1200 cm⁻¹. Furthermore, Fig. 6 illustrates the result of separating the waveform related to the light absorption into two waveforms (T1, T2) each having a peak (P1, P2) with a baseline B0 as a transmittance of 0%.

As illustrated in Fig. 6, the silicone polymer shows the peak P1 corresponding to symmetric bending vibration of O-Si-O at a wavenumber of about 1020 cm⁻¹, and the peak P2 corresponding to antisymmetric stretching vibration of O-Si-O at a wavenumber of about 1100 cm⁻¹. Both the waveform T1 including the peak P1 and the waveform T2 including the peak P2 exhibit a convex shape toward lower transmittance.

Because the peak P1 is derived from a mode in which oxygen atoms vibrate symmetrically with respect to Si atoms, even when the Si atom a1 bonded to four oxygen atoms is compared with the Si atom a2 having a bond with an organic group, a difference in absorbance between the Si atom a1 and the Si atom a2 is small, and a difference in intensity of the peak P1 in the transmission spectrum is small. On the other hand, the peak P2 is derived from a mode in which oxygen atoms vibrate asymmetrically with respect to the Si atom. In the Si atoms a1 each bonded to four oxygen atoms, the adjacent Si atoms are bonded via oxygen atoms to cause the oxygen atoms to vibrate in antisymmetric manner less easily with respect to the Si atoms. Therefore, the peak P2 decreases as the modification by the ultraviolet light L1 progresses.

In view of this, in Fig. 6, regarding a peak area A1 which is an area defined by the waveform T1 and the baseline B0 and a peak area A2 which is an area defined by the waveform T2 and the baseline B0, it can be said that a proportion of the peak area A1 to the sum of the peak area A1 and the peak area A2 reflects the proportion of the Si atoms a1 each bonded to four oxygen atoms in the hard coat layer 7. In addition, it can be said that the proportion of the peak area A2 to the sum of the peak area A1 and the peak area A2 reflects the proportion of the Si atoms a2 each having a bond with an organic group in the hard coat layer 7.

The present inventor has defined the proportion of the peak area A1 to the sum of the peak area A1 and the peak area A2 as the proportion of the inorganic glass component in the modified region 9, in view of the fact that the peak P2 decreases and the peak P1 relatively increases at the time when the Si atoms a1 each bonded to four oxygen atoms, that is, the modified region 9 in which the inorganic glass component is increased is formed by irradiation with the ultraviolet light L1. Similarly, the proportion of the Si atoms a2 each having a bond with an organic group, that is, the organic silicone component in the modified region 9 has been defined as the proportion of the peak area A2 to the sum of the peak area A1 and the peak area A2.

That is, the "proportion of the inorganic glass component" is obtained by determining the proportion of the peak area A1 to the sum of the peak area A1 of the peak P1 and the peak area A2 of the peak P2 in an ATR-FTIR spectrum.

Although details will be described later, ATR-FTIR is an analysis method for obtaining a transmission spectrum of a sample surface. That is, by acquiring the ATR-FTIR spectrum of the hard coat layer 7, the proportion of the inorganic glass component in the modified region 9 is obtained, and the state of the modified region 9 formed by the ultraviolet light L1 can be evaluated.

In the present embodiment, the proportion of the inorganic glass component in the modified region 9 is 40% to 50%. Details will be described in the section of "Verification" in the subsequent stage, but by setting the proportion of the inorganic glass component to 40% to 50%, the resin glass 1 excellent in abrasion resistance is obtained.

In the above description, the resin glass 1 has been described as a rectangular plate-like body, but in the present invention, the shape of the resin glass 1 is not limited. For example, the resin glass 1 can be appropriately processed by bending or the like in accordance with the application.

For example, the resin glass 1 can be used as a window material of a windshield of an automobile.

### [Verification 1]

The relationship between the proportion of the inorganic glass component in the modified region 9 formed on the outer surface of the hard coat layer 7 and the ΔHaze value indicating the abrasion resistance of the resin glass 1 has been verified and will be described below.

### (Sample 1)

The resin glass having the laminated structure described with reference to Fig. 2 was produced on the basis of the method for producing the resin glass 1 described above. The substrate 3 formed of polycarbonate was used. In addition, the primer layer 5 was formed by using SHP470 FT-2050 manufactured by Momentive Performance Materials Inc., and the hard coat layer 7 was formed by using AS4700F manufactured by Momentive Performance Materials Inc.

Next, the hard coat layer 7 formed over the substrate 3 was irradiated with ultraviolet light L1 to have the modified region 9 formed on the outer surface of the hard coat layer 7. Irradiation with the ultraviolet light L1 was executed by using, as a light source, an Xe excimer lamp having a light emitting gas containing Xe sealed therein. That is, the hard coat layer 7 was irradiated with the ultraviolet light L1 having a main wavelength of 172 nm.

The integrated amount of light of the ultraviolet light L1 was set to 1 J/cm². The integrated amount of light was measured by using UIT-250 manufactured by Ushio Inc., equipped with VUV-S172 as a light receiver.

The transmission spectrum of the hard coat layer 7, more specifically, the modified region 9 was acquired by the ATR-FTIR. In the ATR-FTIR, a crystal having a higher refractive index than a sample is brought into close contact with the surface of the sample, and the sample is irradiated with infrared light from the crystal side and totally reflected light, which is light that penetrates into the surface and its vicinity and is reflected, is measured, so that a transmission spectrum of surface of the sample is obtained. As a measurement apparatus, FT/IR-4600 manufactured by JASCO Corporation was used. Ge crystals were used as high refractive index crystals. In addition, an incident angle of infrared light was set to 45 degrees.

Then, as described with reference to Fig. 6, the peak area A1 of the peak P1 derived from the symmetric bending vibration of O-Si-O and the peak area A2 of the peak P2 derived from the antisymmetric stretching vibration of Si-O-Si were calculated. Furthermore, the proportion of the inorganic glass component and the proportion of the organic silicone component in the modified region 9 were calculated by calculating the proportion of each peak area (A1, A2) to the sum of both peak areas.

The analysis of the peaks on the transmission spectrum was performed by using the "Spectrum Manager" installed as standard software in the measurement apparatus described above.

Next, a method for measuring the ΔHaze value (%) of the resin glass will be described. The Δ haze value was measured by using an abrasion tester Taber 5130 (manufactured by Taber Industries) and abrading wheels CS-10F (manufactured by Taber Industries) in accordance with the method defined in JIS R 3212 (Test method for safety glass for automobile). Specifically, the haze values (%) before and after abrasion of the resin glass were measured by a haze meter HZ-0 (manufactured by Suga Test Instruments Co., Ltd.), and the change in the haze value (%) before and after the abrasion was calculated, thereby the ΔHaze value (%) was obtained. Note that, it can be said that the lower the ΔHaze value, the less easily affected by abrasion, and the better the abrasion resistance.

### (Sample 2)

Sample 2 was prepared under the same conditions as Sample 1 except that the integrated amount of light of the ultraviolet light L1 was set to 3 J/cm².

### (Sample 3)

Sample 3 was prepared under the same conditions to Sample 1 except that the integrated amount of light of the ultraviolet light L1 was set to 5 J/cm².

### (Sample 4)

Sample 4 was prepared under the same conditions to Sample 1 except that the integrated amount of light of the ultraviolet light L1 was set to 7 J/cm².

### (Sample 5)

Sample 5 was prepared under the same conditions to Sample 1 except that the integrated amount of light of the ultraviolet light L1 was set to 9 J/cm².

### [Results and discussion of Verification 1]

Table 1 below shows the ΔHaze value of each sample together with the proportion of the inorganic glass component and the proportion of the organic silicone component in the modified region 9 of each sample.

**[Table 1]**

| | Integrated amount of light (J/cm²) | Proportion (%) of inorganic glass component | Proportion (%) of organic silicone component | ΔHaze value (%) |
|---|---|---|---|---|
| Sample 1 | 1 | 39.1 | 60.9 | 2.5 |
| Sample 2 | 3 | 42.5 | 57.5 | 1.6 |
| Sample 3 | 5 | 45.6 | 54.4 | 0.9 |
| Sample 4 | 7 | 50.1 | 49.9 | 2.0 |
| Sample 5 | 9 | 52.4 | 47.6 | 5.6 |

According to Table 1, the proportion of the inorganic glass component increases as the integrated amount of light of the ultraviolet light L1 increases. It can be seen from the result that the hard coat layer 7 is modified by irradiation with the ultraviolet light L1.

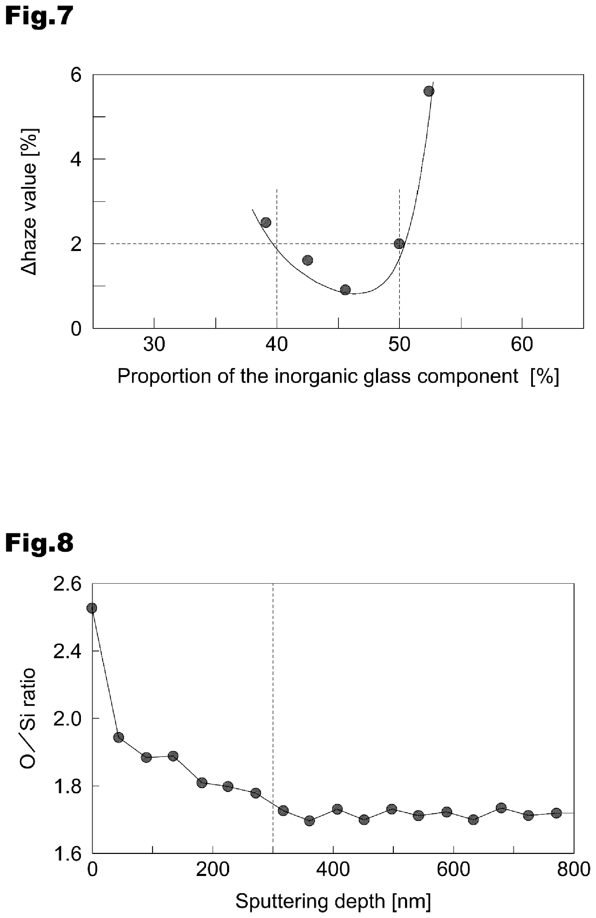

Fig. 7 is a graph in which the ΔHaze value is plotted on the vertical axis and the proportion of the inorganic glass component is plotted on the horizontal axis. In Fig. 7, an approximate curve for respective plots is illustrated. The present inventor has found that there is a correlation between the ΔHaze value and the proportion of the inorganic glass component as illustrated in Fig. 7. Specifically, the ΔHaze value decreases as the proportion of the inorganic glass component increases, and shows a minimum value at a point where the proportion of the inorganic glass component is about 46%. Thereafter, it is found that the ΔHaze value increases as the proportion of the inorganic glass component increases. That is, when the modification of the modified region 9 progresses too much, the abrasion resistance of the resin glass decreases.

The proportion of the inorganic glass component of the hard coat layer 7 used in this verification before the irradiation with the ultraviolet light L1 is performed is about 38%. That is, when the modification by the ultraviolet light L1 progresses and, for example, the proportion of the inorganic glass component greatly exceeds 50%, the abrasion resistance of the resin glass is deteriorated as compared with the time before the irradiation with the ultraviolet light L1.

Conventionally, in order to improve the abrasion resistance of the hard coat layer 7, it has been studied to modify the hard coat layer 7 to increase the inorganic glass component of the hard coat layer 7. However, as a result of intensive studies by the present inventors, as illustrated in Fig. 7, it has been newly found that the abrasion resistance of the resin glass is rather deteriorated when the modification of the hard coat layer 7 progresses too much.

It can be said that the lower the ΔHaze value, the better the abrasion resistance. According to Fig. 7, it can be understood that a resin glass having a low ΔHaze value can be produced in accordance with the application of the resin glass by using the proportion of the inorganic glass component as an index.

Furthermore, according to Fig. 7, it can be seen that the ΔHaze value is 2% or less in a case where the proportion of the inorganic glass component is in a range of 40% to 50%. That is, by making the proportion of the inorganic glass component in the modified region 9 be in the above range, a resin glass having a ΔHaze value of 2% or less and excellent abrasion resistance is obtained. The resin glass can be suitably used for, for example, a windshield of an automobile.

In view of Verification 1, it can be understood that, according to the above embodiment, a resin glass having a ΔHaze value of 2% or less and excellent abrasion resistance can be obtained.

In addition, by adjusting the integrated amount of light of the ultraviolet light L1, the hard coat layer 7 can be irradiated with the ultraviolet light L1 so that the proportion of the inorganic glass component at the outermost surface of the modified region 9 is 40 to 50%. The integrated amount of light can be appropriately adjusted in accordance with, for example, the illuminance of the light source that emits the ultraviolet light L1 and the irradiation time.

### [Verification 2]

From the viewpoint of verifying the state of the modified region 9 in more detail, the hard coat layer 7 on which the modified region 9 is formed is analyzed by X-ray photoelectron spectroscopy (also called "XPS"), and thus, will be described below. Information on the elemental composition in the hard coat layer 7 can be acquired by the XPS.

The XPS was performed by using a photoelectron spectrometer (PHI Quantera II) manufactured by ULVAC-PHI INCORPORATED.

As described above, the modified region 9 is formed by modifying the hard coat layer 7. This process of modification is caused by photocleavage of the Si-R bond in the hard coat layer 7 by irradiation with the ultraviolet light L1 and a binding reaction of oxygen atoms to the photocleaved Si atom. That is, it is considered that an O/Si ratio (the ratio of abundance of oxygen atoms to abundance of Si atoms) in the hard coat layer 7 decreases from the modified region 9 toward the substrate 3 side.

In other words, it is considered that the modified region 9 has a higher proportion of the inorganic glass component than the surface 7a of the hard coat layer 7 on the side facing the substrate 3.

Fig. 8 is a graph illustrating XPS analysis results of the resin glass 1. In Fig. 8, the O/Si ratio is plotted on the vertical axis, and a sputtering depth (nm) based on the surface of the resin glass 1 is plotted on the horizontal axis. The abundance of oxygen atoms is determined based on the energy level of the 1s orbital of oxygen atoms, and the abundance of Si atoms is determined based on the energy level of the 2p orbital of Si atoms.

Specific measurement conditions of XPS are as follows.
Ion species: Ar
Acceleration voltage of ion gun: 2 kV
Sputtering rate: 8.3 nm/min
Sputtering range: 0.25 mm²

The sputtering rate was determined by using, as a standard sample, an Si substrate on which an SiO₂ layer having a thickness of 100 nm was formed. Therefore, a numerical value of the sputtering depth itself illustrated in Fig. 8 does not correspond to, for example, the actual thickness of the modified region 9.

As illustrated in Fig. 8, the O/Si ratio decreases in the direction in which the sputtering depth increases, that is, in the depth direction from the modified region 9 toward the substrate 3 in the resin glass 1. It can be seen that when the sputtering depth is larger than about 300 nm, the O/Si ratio is constant around 1.7.

That is, it can be understood that the modification reaction by the ultraviolet light L1 does not occur in a range where the sputtering depth is about 300 nm or more. In addition, it can be understood that the O/Si ratio is increased by the modification reaction by the ultraviolet light L1 in a range of the sputtering depth of 0 nm to about 300 nm, which corresponds to the modified region 9.

In view of the above, it is clear that the modified region 9 has a higher proportion of the inorganic glass component than a region on the substrate 3 side of the modified region 9, for example, the surface 7a of the hard coat layer 7 on the side facing the substrate 3.

According to Verification 2, although the sputtering depth illustrated in Fig. 8 is not a numerical value corresponding to the actual thickness of the modified region 9, it was confirmed by the XPS that the modified region 9 was formed on the outer surface of the hard coat layer 7.

### [Apparatus for producing resin glass]

Next, an example of an apparatus for producing the resin glass 1 will be described. Note that, in the following description, description of the already described matters is appropriately omitted.

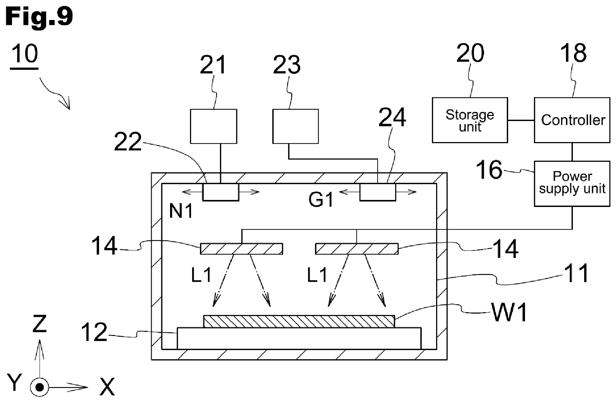

Fig. 9 is a view illustrating a configuration example of a producing apparatus 10 of the resin glass 1, and illustrates some components in a block diagram. As illustrated in Fig. 9, the producing apparatus 10 includes a processing chamber 11 in which a workpiece W1 to be processed is accommodated, a support unit 12 that supports the workpiece W1, a light source 14, a power supply unit 16, a controller 18, and a storage unit 20.

As described with reference to Figs. 2 and 3, the workpiece W1 is the substrate 3 having the hard coat layer 7 formed over the substrate 3. The producing apparatus 10 irradiates the hard coat layer 7 over the substrate 3 with the ultraviolet light L1 to have the modified region 9 formed on the outer surface of the hard coat layer 7 to produce the resin glass 1.

The processing chamber 11 accommodates the workpiece W1 and the light source 14, and forms a processing space in which the workpiece W1 is subjected to the modification processing.

As illustrated in Fig. 9, the processing chamber 11 may include a gas introduction part 22 into which an inert gas N1 such as nitrogen gas can be introduced from a reservoir part 21. Similarly, the processing chamber 11 may include a gas introduction part 24 into which an oxygen-containing gas G1 can be introduced from a reservoir part 23. The oxygen-containing gas G1 may be air such as clean dry air (CDA). The oxygen concentration in the processing chamber 11 can be adjusted by introducing respective gases from the gas introduction parts (22, 24).

The support unit 12 supports the workpiece W1 such that the workpiece W1 can be irradiated with the ultraviolet light L1 emitted from the light source 14. Fig. 9 illustrates an example in which the workpiece W1 is supported by, for example, a rectangular stage, but the workpiece W1 may be supported by a conveyor or the like that can convey the workpiece W1. In a case where the processing of the workpiece W1 is performed while the workpiece W1 is conveyed in, for example, the X direction, a take-out part through which the workpiece W1 can pass is appropriately provided on a wall surface of the processing chamber 11 in the X direction.

The light source 14 is, for example, an excimer lamp containing Xe as a light emitting gas. The power supply unit 16 includes a power supply circuit for converting a voltage supplied from a not-illustrated power source into a voltage necessary for turning on the light source 14 and supplying the voltage.

The controller 18 is configured to transmit a control signal to the power supply unit 16, and includes, for example, a processor such as a CPU.

The storage unit 20 includes a memory. As an example, the storage unit 20 stores the integrated amount of light of the ultraviolet light L1 necessary for obtaining the modified region 9 indicating the target proportion of the inorganic glass component.

Typically, the target proportion of the inorganic glass component is in a range of 40% to 50%, and a value at which the ΔHaze value of the resin glass 1 is the lowest is selected. In addition, the integrated amount of light for obtaining the modified region 9 having the proportion of the inorganic glass component is set, for example, under irradiation conditions of the ultraviolet light L1, such as an oxygen concentration in the processing chamber 11 and a separation distance between the light source 14 and the workpiece W1.

The controller 18 reads the integrated amount of light stored in the storage unit 20 and controls the power supply unit 16. With this configuration, the illuminance and the lighting time of the light source 14 are adjusted, and the hard coat layer 7 is modified with a predetermined integrated amount of light, so that the modified region 9 indicating the target proportion of the inorganic glass component is obtained.

That is, by obtaining in advance the integrated amount of light necessary for obtaining the modified region 9 indicating the target proportion of the inorganic glass component, and lighting the light source 14 on the basis of the integrated amount of light, the resin glass 1 having, for example, a ΔHaze value of 2% or less and excellent abrasion resistance can be produced.

Note that the method of setting the integrated amount of light is not limited to the above. For example, the storage unit 20 may store a table shown in Table 2 below.

**[Table 2]**

| Target proportion (%) of inorganic glass component | Oxygen concentration (ppm) | Integrated amount of light (J/cm²) |
|---|---|---|
| R1 | C1 | S1 |
| | C2 | S2 |
| | C3 | S3 |
| | ... | ... |

For example, as shown in Table 2, the storage unit 20 may store integrated amounts of light (S1, S2,...) with each of which a target proportion R1 of the inorganic glass component is obtained in accordance with oxygen concentrations (C1, C2,...) in the processing chamber 11. In this case, the controller 18 drives the gas introduction parts (22, 24) on the basis of a predetermined oxygen concentration (C1, C2,...) and adjusts the oxygen concentration in the processing chamber 11, and then, controls the power supply unit 16 on the basis of a predetermined integrated amount of light (S1, S2,...).

In addition, the storage unit 20 may store a plurality of tables, each of which is used in accordance with the material constituting the hard coat layer 7. Furthermore, in a case where irradiation with the ultraviolet light L1 is performed in a state where the workpiece W1 is conveyed in the X direction, the table stored in the storage unit 20 may include a conveyance speed condition of the workpiece W1.

Furthermore, the controller 18 may be configured such that data related to a predetermined integrated amount of light can be received from any server. That is, whether or not the producing apparatus 10 includes the storage unit 20 is optional.

The present invention is not limited to the configuration of the above embodiments, and the above embodiments can be realized by being appropriately combined with each other.

### DESCRIPTION OF REFERENCE SIGNS

- 1: Resin glass
- 3: Substrate
- 5: Primer layer
- 7: Hard coat layer
- 9: Modified region
- 10: Producing apparatus
- 11: Processing chamber
- 12: Support unit
- 14: Light source
- 16: Power supply unit
- 18: Controller
- 20: Storage unit
- 21, 23: Reservoir part
- 22, 24: Gas introduction part
- L1: Ultraviolet light

## Claims

1. A resin glass comprising:
a substrate having visible light transmissivity; and
a hard coat layer containing a silicone polymer and formed over the substrate, wherein
the hard coat layer has a modified region on an outer surface of the hard coat layer, the modified region containing an inorganic glass component with a proportion higher than a proportion on a surface of the hard coat layer on the side facing the substrate, and
the proportion of the inorganic glass component of the modified region is 40% to 50%.

2. The resin glass according to claim 1, wherein the resin glass is provided for a windshield of an automobile.

3. The resin glass according to claim 1 or 2, wherein the modified region has a thickness on a submicron order in a direction orthogonal to a main surface of the substrate.

4. A method for producing a resin glass, the method comprising
a step of forming a modified region by irradiating a hard coat layer with ultraviolet light having a main wavelength in a wavelength band of 243 nm or less and modifying a surface of the hard coat layer, the hard coat layer containing a silicone polymer and formed over a substrate having visible light transmissivity, wherein
the step of forming the modified region is a step of irradiating the hard coat layer with the ultraviolet light such that a proportion of an inorganic glass component in the modified region is 40% to 50%.

5. An apparatus for producing a resin glass, the apparatus forming a modified region by irradiating, with ultraviolet light, a substrate having visible light transmissivity and formed with a hard coat layer containing a silicone polymer and by modifying a surface of the hard coat layer, the apparatus comprising:
a support unit that supports the substrate; and
a light source that emits the ultraviolet light having a main wavelength located in a wavelength band of 243 nm or less toward the substrate, wherein
the light source irradiates the hard coat layer with the ultraviolet light with an integrated amount of light such that a proportion of the inorganic glass component in the modified region is 40% to 50%.

6. The apparatus for producing a resin glass according to claim 5, further comprising:
a storage unit that stores an integrated amount of light such that a proportion of the inorganic glass component in the modified region is 40% to 50%; and
a controller that controls a lighting operation of the light source on a basis of the integrated amount of light stored in the storage unit.
